# EUROPEAN PATENT APPLICATION

(11) **EP 3 549 786 A1**
(43) Date of publication of application: **09.10.2019**
(21) Application number: 17875801.7
(22) Date of filing: 01.11.2017
(51) Int. Cl.: B60C 9/18, B60C 9/00

(54) **RUBBER CORD COMPOSITE, REINFORCING MEMBER FOR TIRES, AND TIRE USING SAME**

(30) Priority: 30.11.2016 JP 2016232145
(71) Applicant: Bridgestone Corporation, Tokyo 104-8340 (JP)
(72) Inventor: SASAKI Yosuke, Tokyo 104-8340 (JP)
(74) Representative: Oxley, Robin John George
(86) International application number: PCT/JP2017/039603
(87) International publication number: WO 2018/100961

(57) **Abstract**

Provided are: a rubber-cord composite that improves the strength and modulus of an entire belt layer without causing any problem attributed to reinforcing cords and can thereby further improve the durability of a tire as compared to conventional tires; a tire reinforcing member; and a tire using the same. The rubber-cord composite is used for a spiral cord layer of a tire reinforcing member that includes a core-material cord layer 2 and a spiral cord layer 3. A reinforcing cord 3a is singly or plurally arranged in parallel and coated with a rubber. The reinforcing cord includes a nonmetallic fiber. When the modulus, end count, thickness, specific gravity, final twist number and total fineness of the reinforcing cord are defined as A, B, C, D, E and F, respectively, a modulus X represented by X = A×B is 1,000 GPa or higher; a cord interval Y represented by Y = (50 - B × C)/B is 0.1 mm to 5 mm; and a twisting coefficient of the reinforcing cord represented by Z = tanθ = E × √(0.125 × F/D)/1,000 is higher than 0.3.

## Description

### TECHNICAL FIELD

The present invention relates to a rubber-cord composite (hereinafter, also simply referred to as "composite"), a tire reinforcing member (hereinafter, also simply referred to as "reinforcing member"), and improvement of a tire using the same.

### BACKGROUND ART

A variety of studies have been conducted on tire reinforcing members. For example, as the structure of a belt used as a reinforcing member of a tire for passenger vehicles, a structure in which two or more intersecting belt layers whose reinforcing cord directions intersect with each other are arranged on the outer side in the tire radial direction of a crown portion of a carcass serving as a skeleton member is commonly adopted. In addition, as the structure of a belt, a structure in which upper and lower two belt layers are arranged such that their organic fiber cords, which are reinforcing cords, intersect with each other, the organic fiber cords being folded back at the belt layer ends and configured in a spirally wound structure in which the organic fiber cords extend from one belt layer to the other, and a steel belt layer in which reinforcing cords composed of steel cords are arrayed is arranged between the belt layers having the organic fiber cords, is also known.

As such structures, for example, Patent Documents 1 and 2 propose pneumatic radial tires in which, by defining the orientation angle of each reinforcing cord of a steel belt layer with respect to the tire circumferential direction, not only the edge separation resistance of belt layers of pneumatic tires for passenger vehicles but also other tire performances are improved.

### RELATED ART DOCUMENTS

### PATENT DOCUMENTS

[Patent Document 1] JPH10-109502A
[Patent Document 2] JPH10-109503A

### SUMMARY OF THE INVENTION

### PROBLEMS TO BE SOLVED BY THE INVENTION

The belts proposed in Patent Documents 1 and 2 have a structure constituted by three belt layers that are each formed by spirally winding reinforcing members composed of organic fiber cords on a steel belt layer; therefore, it is believed that a certain level of durability can be ensured while achieving a weight reduction. However, since reinforcing cords other than metal cords such as steel cords are used in the spiral cord layers, the strength and the modulus of the belt layers as a whole are reduced and suppression of diameter growth and distortion of the tires during traveling are insufficient as compared to a case of using two intersecting steel belt layers.

In this respect, for a further improvement of the durability, it is considered to use cords having a relatively large cord diameter as reinforcing cords of the spiral cord layers; however, a certain number of cords is required for maintaining the shape of each belt layer. When the cord count is increased along with an increase in the cord diameter, the resulting excessively small gaps between the cords in each spiral cord layer may cause local heat generation due to concentration of strain and fretting due to abrasion of the cords, and this can lead to a reduction in the durability. Therefore, it is demanded to establish a technology that is capable of improving the strength and modulus of an entire belt layer without causing any problem attributed to reinforcing cords, such as fretting, and thereby further improving the durability of a tire as compared to conventional tires.

In view of the above, an object of the present invention is to provide: a rubber-cord composite that improves the strength and modulus of an entire belt layer without causing any problem attributed to reinforcing cords and can thereby further improve the durability of a tire as compared to conventional tires; a tire reinforcing member; and a tire using the same.

### MEANS FOR SOLVING THE PROBLEMS

The present inventor intensively studied to solve the above-described problems and consequently discovered that the problems can be solved by defining each of the modulus of a rubber-cord composite itself, the cord interval in the rubber-cord composite and the twisting coefficient of reinforcing cords used in the rubber-cord composite in a specific range.

That is, the rubber-cord composite of the present invention is a rubber-cord composite to be used in a spiral cord layer of a tire reinforcing member that includes at least one core-material cord layer and the spiral cord layer having a reinforcing cord spirally wound on the core-material cord layer, wherein
the reinforcing cord is singly or plurally arranged in parallel and coated with a rubber,
the reinforcing cord includes a nonmetallic fiber, and
when the modulus per cord of the reinforcing cord is A (GPa), the cord end count per 50 mm width of the rubber-cord composite is B (cords/50 mm), the thickness of the reinforcing cord is C (mm), the specific gravity of the reinforcing cord is D (g/cm³), the final twist number of the reinforcing cord is E (times/10 cm), and the total fineness of the reinforcing cord is F (dtex):
a modulus X per 50 mm width of the rubber-cord composite represented by X = A × B is 1,000 GPa or higher;
a cord interval Y between adjacent reinforcing cords in the rubber-cord composite in a direction perpendicular to the cord longitudinal direction represented by Y = (50 - B × C)/B is 0.1 mm to 5 mm; and
a twisting coefficient Z of the reinforcing cord represented by Z = tanθ = E × √(0.125 × F/D)/1,000 is higher than 0.3.

In the present invention, the total fineness F of the reinforcing cord is preferably 1,000 dtex to 30,000 dtex, more preferably 5,000 dtex to 30,000 dtex, still more preferably 9,000 dtex to 30,000 dtex.

Further, in the present invention, the nonmetallic fiber is preferably at least one selected from aramid fibers, polyketone fibers, poly-p-phenylene benzobisoxazole fibers, polyarylate fibers, basalt fibers, carbon fibers and glass fibers and, thereamong, the nonmetallic fiber is more preferably either or both of a carbon fiber and a glass fiber.

Still further, in the present invention, the modulus X is preferably 2,000 GPa to 6,000 GPa. Yet still further, in the present invention, the bending stress per 50 mm width of the rubber-cord composite in an unvulcanized state, which is measured by a 3-point bending test in accordance with JIS K7074, is preferably 0.1 N to 80 N.

A tire reinforcing member of the present invention includes at least one core-material cord layer and a spiral cord layer having a reinforcing cord spirally wound on the core-material cord layer, the tire reinforcing member being characterized in that the spiral cord layer is formed using the rubber-cord composite.

In the reinforcing member of the present invention, it is preferred that a core-material cord of the core-material cord layer be composed of a metal cord, and that the core-material cord has an inclination angle of 40° to 90° with respect to the longitudinal direction of the core-material cord layer.

In the present invention, the core-material cord layer preferably has a thickness of 1 to 3 mm.

A tire of the present invention is characterized by having the above-described tire reinforcing member.

### EFFECTS OF THE INVENTION

According to the present invention, a rubber-cord composite that improves the strength and modulus of an entire belt layer without causing any problem attributed to reinforcing cords and can thereby further improve the durability of a tire as compared to conventional tires, a tire reinforcing member, and a tire using the same can be realized.

### BRIEF DESCRIPTION OF THE DRAWINGS

FIG. 1 is a cross-sectional view in the width direction of a tire reinforcing member according to one preferred embodiment of the present invention.
FIG. 2 is a schematic plan view illustrating a reinforcing cord angle of a tire reinforcing member according to one preferred embodiment of the present invention.
FIG. 3 is a cross-sectional view illustrating a cross-section of a rubber-cord composite in a direction perpendicular to the cord longitudinal direction.
FIG. 4 is a cross-sectional view in the tire width direction illustrating one configuration example of a tire for passenger vehicles.
FIG. 5 is a partial cross-sectional view in the tire width direction illustrating a tread portion of a tire for passenger vehicles according to the present invention.
FIG. 6 is a cross-sectional view in the tire width direction illustrating one configuration example of a tire for trucks and buses.
FIG. 7 is a partial cross-sectional view in the tire width direction illustrating a tread portion of a tire for trucks and buses according to the present invention.
FIG. 8 is a cross-sectional view in the tire width direction illustrating one configuration example of a tire for construction vehicles.
FIG. 9 is a partial cross-sectional view in the tire width direction illustrating a tread portion of a tire for construction vehicles according to the present invention.
FIG. 10 is an explanatory view illustrating a method of measuring a bending stress of a rubber-cord composite employed in Examples.

### MODE FOR CARRYING OUT THE INVENTION

The present invention will now be described in detail referring to the drawings.

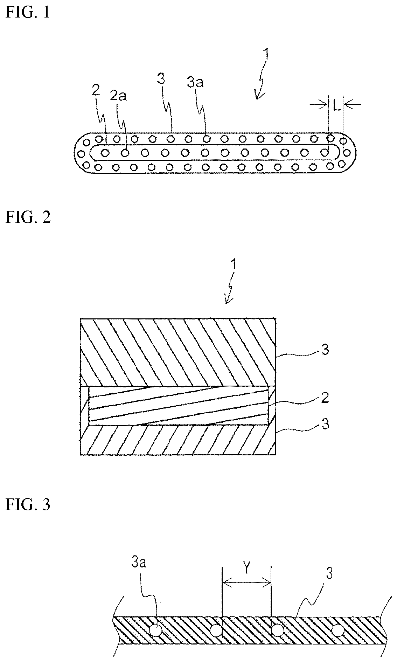

FIGs. 1 and 2 are a cross-sectional view in the width direction and a schematic plan view that illustrate a tire reinforcing member according to one preferred embodiment of the present invention, respectively. A tire reinforcing member 1 of the present invention includes at least one core-material cord layer 2 and a spiral cord layer 3 having a reinforcing cord 3a spirally wound on the core-material cord layer 2. The core-material cord layer 2 is produced by parallelly aligning a large number of core-material cords 2a and then arranging an unvulcanized rubber on top and bottom thereof to coat the core-material cords with the rubber. The illustrated reinforcing member of the present invention has a single core-material cord layer 2; however, the core-material cord layer 2 may be laminated in a plurality of layers, for example, in 2 to 10 layers.

The rubber-cord composite of the present invention is used in the spiral cord layer 3 and formed by arranging one or more, for example, 2 to 100 reinforcing cords 3a in parallel and coating the reinforcing cords 3a with a rubber. In the present invention, the spiral cord layer 3 is formed by spirally winding the rubber-cord composite of the present invention around the core-material cord layer 2.

In the present invention, as the reinforcing cords 3a of the rubber-cord composite, cords containing a nonmetallic fiber are used. Specific examples of the nonmetallic fiber include organic fibers, carbon fibers (CF), glass fibers, and rock fibers (rock wool). As the organic fibers, for example, aramid fibers (aromatic polyamide fibers), polyketone (PK) fibers, poly-p-phenylene benzobisoxazole (PBO) fibers and polyarylate fibers can be suitably used. Examples of the carbon fibers include polyacrylonitrile (PAN)-based carbon fibers, pitch-based carbon fibers, and rayon-based carbon fibers. Further, examples of the rock fibers include basalt fibers and andesite fibers. In the present invention, the reinforcing cords may be any cords as long as they contain any of these nonmetallic fibers; therefore, cords composed of any one of these nonmetallic fibers, hybrid cords composed two or more of these nonmetallic fibers, or cords composed of a hybrid fiber of a nonmetallic fiber and a metallic fiber, such as an organic fiber partially containing a metallic fiber, can be used. The nonmetallic fiber is contained in the reinforcing cords in an amount of not less than 50% by volume, particularly preferably not less than 80% by volume, and it is most preferred to use reinforcing cords consisting of only nonmetallic fibers. Particularly, as the nonmetallic fiber, one or more selected from aramid fibers, polyketone fibers, PBO fibers, polyarylate fibers, basalt fibers, carbon fibers and glass fibers can be preferably used, and it is possible to use cords composed of any one of these fibers or hybrid cords composed of two or more of these fibers as the reinforcing cords. It is particularly preferred to use either or both of a carbon fiber and a glass fiber as the nonmetallic fiber and to use cords composed of either of these fibers or hybrid cords composed of both of these fibers as the reinforcing cords. Particularly, a carbon fiber is preferred since it has a specific gravity and exhibits high rigidity and, thus, a reduction in weight and an increase in rigidity can be achieved at the same time. It is noted here that the reinforcing cords 3a be treated with an adhesive so as to improve their adhesion with a rubber. This adhesive treatment can be performed in accordance with a conventional method using a commonly-used adhesive such as an RFL-based adhesive.

In the present invention, when the modulus per reinforcing cord 3a is A (GPa), the cord end count per 50 mm width of the rubber-cord composite is B (cords/50 mm), the thickness of the reinforcing cord 3a is C (mm), the specific gravity of the reinforcing cord 3a is D (g/cm³), the final twist number of the reinforcing cord 3a is E (times/10 cm), and the total fineness of the reinforcing cord 3a is F (dtex), it is important that the below-described relationships be satisfied. It is noted here that, in the present invention, the thickness C of the reinforcing cord 3a is the thickness (cord diameter) measured as a dipped cord after the adhesive treatment. Further, in the present invention, the thickness C and the total fineness F of the reinforcing cord 3a can be measured in accordance with JIS L1017.

First, in the present invention, the modulus X per 50 mm width of the rubber-cord composite represented by X = A × B is 1,000 GPa or higher. By defining the modulus X of the rubber-cord composite in this range, a reinforcing member 1 not only is allowed to have a higher modulus than conventional reinforcing members and can ensure sufficient tensile rigidity as an alternative to steel belts, but also can improves shape-retaining effect of a tire when the tire is inflated and can thereby contribute to an improvement of the durability and a reduction in loss of the tire. The modulus X (GPa) is preferably 2,000 GPa to 6,000 GPa, more preferably 2,500 GPa to 3,500 GPa.

In the present invention, the modulus is determined in accordance with the "initial tensile resistance" test method prescribed in JIS L1013 or JIS L1017.

Further, in the present invention, the cord interval Y (mm) between adjacent reinforcing cords 3a in the rubber-cord composite in a direction perpendicular to the cord longitudinal direction represented by Y = (50 - B × C)/B is 0.1 mm to 5 mm. FIG. 3 is a cross-sectional view illustrating a cross-section of the rubber-cord composite in the direction perpendicular to the cord longitudinal direction.

As described above, when the gaps between the reinforcing cords 3a in the layer are excessively small, the durability may be reduced due to the occurrence of local heat generation and fretting and the like; however, in the present invention, by defining the cord interval specified by the relationship of the end count and the cord diameter to be in the above-described range, the durability is not deteriorated due to the cord interval no matter how large the cord diameter is and regardless of the tire size. The cord interval Y (mm) is preferably 0.2 mm to 5 mm, more preferably 0.3 mm to 5 mm.

In the present invention, by controlling the modulus X and the cord interval Y to satisfy the above-described respective ranges, a rubber-cord composite having a desired modulus, namely the spiral cord layer 3, can be realized while ensuring necessary and sufficient durability.

Moreover, in the present invention, the twisting coefficient Z of the reinforcing cord 3a represented by Z = tanθ = E × √(0.125 × F/D)/1,000 is higher than 0.3. By controlling the twisting coefficient Z to be high in this range or so, sufficient fatigue resistance of the reinforcing cord 3a can be ensured while improving the workability in winding the reinforcing cord 3a on the core-material cord layer, so that a rubber-cord composite having a high performance in addition to the above-described effects as well as a tire reinforcing member using the rubber-cord composite and a tire having the same can be obtained. The twisting coefficient Z of the reinforcing cord 3a is preferably higher than 0.3 but 1.0 or lower, more preferably higher than 0.3 but 0.6 or lower.

In the present invention, the modulus A per reinforcing cord 3a, the cord end count B per 50 mm width of the rubber-cord composite, the thickness C of the reinforcing cord 3a, the specific gravity D of the reinforcing cord 3a, and the final twist number E of the reinforcing cord 3a are not particularly restricted as long as they are in ranges that satisfy the above-described respective conditions, and can be selected as desired.

The total fineness F of the reinforcing cord 3a is preferably 1,000 dtex to 30,000 dtex, more preferably 5,000 dtex to 30,000 dtex, still more preferably 9,000 dtex to 30,000 dtex. From the standpoint of ensuring the tire rigidity, the higher the total fineness F of the reinforcing cord 3a, the more preferred it is. However, an excessively high total fineness F leads to an increase in the cord diameter, and this results in an increase in the thickness of the member and makes it difficult to bend the member, so that not only the workability in winding a strip (rubber-cord composite) in the tire molding process but also the rolling resistance of the resulting tire are deteriorated; therefore, it is preferred to control the total fineness F of the reinforcing cord 3a to be in the above-described range.

Furthermore, in the present invention, the bending stress (stiffness) per 50 mm width of the rubber-cord composite in an unvulcanized state, which is measured by a 3-point bending test in accordance with JIS K7074, is preferably 0.1 N to 80 N, more preferably 0.1 N to 30 N. By controlling the stiffness per 50 mm width of the rubber-cord composite to be in this range, sufficient windability of the strip on the core-material cord layer can be ensured.

In the reinforcing member 1 of the present invention, the spiral cord layer 3 is formed using the above-described rubber-cord composite; therefore, the reinforcing member 1, when applied to a tire, improves the strength and modulus of an entire belt layer without causing any problem attributed to reinforcing cords and can thereby further improve the durability of the tire as compared to conventional tires. In the reinforcing member 1 of the present invention, what is important is only to use the rubber-cord composite for the spiral cord layer 3 spirally wound on the core-material cord layer 2 and other configurations are not particularly restricted.

In the present invention, the core-material cords 2a of the core-material cord layer 2 may have an inclination angle of 40° to 90° with respect to the longitudinal direction of the core-material cord layer 2. By controlling the angle of the core material cords 2a to be in this range, the tension of the core-material cords 2a is reduced, so that the core-material cords 2a are given an increased leeway before being fractured. This consequently makes the core-material cords 2a less likely to be fractured even when an input is applied thereto from an obstacle. In order to favorably attain this effect, the inclination angle of the core material cords 2a of the core-material cord layer 2 is more preferably 50° to 90° with respect to the longitudinal direction of the core-material cord layer 2. When a plurality of core-material cord layers 2 are arranged, the plurality of core-material cord layers 2 may constitute an intersecting belt layer.

In the reinforcing member 1 of the present invention, since the core-material cord layer 2 does not have high rigidity in the longitudinal direction, the reinforcing member 1 easily elongates in the longitudinal direction. However, when the core-material cords 2a of the core-material cord layer 2 have an angle of 40° to 90° with respect to the longitudinal direction, considering the reinforcing member 1 as a whole, Poisson deformation of the spiral cord layer 3 (deformation in which the spiral cord layer 3 elongates in the longitudinal direction by 1 while shrinking in the width direction by 7, which deformation is caused by symmetrical intersecting layers) is suppressed by the core-material cord layer 2. That is, in the reinforcing member 1 of the present invention, by allowing the core-material cords 2a of the core-material cord layer 2 to have an angle of 40° to 90° with respect to the longitudinal direction, the core-material cord layer 2 functions as a tension rod against shrinking deformation in the width direction caused by Poisson deformation. As a result, elongation of the reinforcing member 1 in the longitudinal direction is inhibited, and the rigidity in the longitudinal direction is thus improved. In addition, with the Poisson deformation being inhibited, not only the rigidity in the longitudinal direction is improved but also shrinking deformation in the width direction is inhibited at the same time; therefore, the rigidity in the width direction is improved as well. In this manner, one or more pairs of reinforcing layers intersecting at a low angle with respect to the tire circumferential direction are elongate in the circumferential direction with application of an internal pressure and, in association therewith, shrink in the tire width direction, and the inhibition of this shrinking deformation by arranging reinforcing layers at a large angle is hereinafter referred to as "tension rod effect".

In the reinforcing member 1 of the present invention, it is preferred that the reinforcing cord(s) 3a of the spiral cord layer 3 have an inclination angle of 10° to 45° with respect to the longitudinal direction of the core-material cord layer 2. By adopting this configuration, elongation of the reinforcing member 1 in the longitudinal direction can be further suppressed. The inclination angle is more preferably 15° to 30°.

In the reinforcing member 1 of the present invention, as the core-material cords 2a used for the core material cord layer 2, metal cords can be employed. As the metal cords, from the standpoints of cost and strength, it is particularly preferred to use steel filaments or steel cords obtained by twisting a plurality of steel filaments together. Particularly, in order to favorably attain the tension rod effect, the compression rigidity in the width direction is preferably high. Therefore, twisted cords are more preferably used than monofilament cords. Various designs can be adopted for the twist structure of the steel cords, and various cross-sectional structures, twist pitches, twist directions and distances between adjacent filaments can be applied to the steel cords. As the cross-sectional structure, various twist structures such as single twist, layer twist and multi-twist can be adopted, and cords having a flat cross-sectional shape can be used as well. Further, cords obtained by twisting filaments of different materials together can also be used. The steel filaments constituting the steel cords contain iron as a main component and may further contain various trace elements, such as carbon, manganese, silicon, phosphorus, sulfur, copper and chromium. Moreover, on the surface of the steel filaments, brass plating may be performed for improvement of the adhesion with rubber.

In the reinforcing member 1 of the present invention, the thickness of the core-material cord layer 2 is preferably 1 to 3 mm, more preferably 1 to 2 mm. By controlling the thickness of the core-material cord layer 2 to be in this range, not only a core-material cord layer having sufficient compression rigidity can be applied, but also the winding radius R of the strip in the ends in the width direction of the core-material cord layer at the time of winding the strip on the core-material cord layer can be ensured to be large to a certain extent, so that the winding performance of the strip material can be sufficiently ensured. Further, generally, the end count of the core-material cords 2a in the core-material cord layer is preferably in a range of 10 to 60 cords/50 mm. By controlling the end count in this range, the tension rod effect can be favorably attained; however, in the reinforcing member 1 of the present invention, the end count is not restricted to be in this range.

In the reinforcing member 1 of the present invention, a rubber composition used as a coating rubber of the core-material cord layer 2 and the spiral cord layer 3 is not particularly restricted and any known rubber composition can be used. For example, as a rubber component contained in the rubber composition used as the coating rubber, any known rubber component can be used, and examples thereof include natural rubbers and synthetic rubbers, such as vinyl aromatic hydrocarbon-conjugated diene copolymers, polyisoprene rubbers, butadiene rubbers, butyl rubbers, halogenated butyl rubbers, and ethylene-propylene rubbers. These rubber components may be used individually, or two or more thereof may be used in combination. From the standpoints of the characteristics of adhesion with metal cords and the fracture characteristics of the rubber composition, the rubber component is preferably one composed of at least either a natural rubber or a polyisoprene rubber, or one which contains a natural rubber in an amount of not less than 50% by mass and in which the remainder is composed of a synthetic rubber.

In the rubber composition used as the coating rubber in the reinforcing member 1 of the present invention, an additive(s) normally used in the rubber industry, examples of which include fillers (e.g., carbon black and silica), softening agents (e.g., aromatic oil), methylene donors (e.g., methoxymethylated melamines, such as hexamethylenetetramine, pentamethoxymethylmelamine, and hexamethylene methylmelamine), vulcanization accelerators, vulcanization aids and age resistors, can be incorporated as appropriate in an ordinary amount. Further, a method of preparing the rubber composition used as the coating rubber in the reinforcing member 1 of the present invention is not particularly restricted and, the rubber composition can be prepared by, for example, kneading sulfur, an organic acid cobalt salt and various additives into a rubber component using a Banbury mixer, a roll or the like in accordance with a conventional method.

Moreover, in the reinforcing member 1 of the present invention, it is preferred that the distance L between the core-material cord 2a at an end in the width direction of the core-material cord layer 2 and the reinforcing cord 3a at an end in the width direction of the spiral cord layer 3 be 0.2 to 20 times of the diameter of the core-material cord 2a of the core-material cord layer 2. By controlling the distance L in the width direction between the reinforcing members of a cut end of the core-material cord 2a constituting the core-material cord layer 2 and the spirally-wound reinforcing cord 3a constituting the spiral cord layer 3 to be 0.2 to 20 times of the diameter of the core-material cord 2a constituting the core-material cord layer 2, a reduction in durability caused by cracking from the cut end of the core-material cord 2a can be inhibited while maintaining the effect of the core-material cord layer 2 as a tension rod. In addition, since a sufficient amount of rubber exists between the core-material cord 2a and the reinforcing cords 3a, the rigidity of the reinforcing member 1 in the width direction can be further improved.

The reinforcing member 1 of the present invention can be suitably used as a reinforcing member of a tire for passenger vehicles, trucks and buses, construction vehicles, two-wheeled vehicles, airplanes, and agriculture. Further, the tire is not restricted to be a pneumatic tire, and the reinforcing member 1 of the present invention can also be used as a reinforcing member of a solid tire or a non-pneumatic tire. The part to which the reinforcing member 1 of the present invention is applied is not particularly restricted. For example, the reinforcing member 1 of the present invention is preferably applied as a belt that covers the majority of the tread portion. In the reinforcing member 1 of the present invention, as described above, not only the rigidity in the longitudinal direction but also the rigidity in the width direction are improved at the same time. Therefore, by using the reinforcing member 1 of the present invention as a belt, in addition to inhibition of interlayer separation of the belt caused by repeated input and inhibition of cord breakage caused by driving over an obstacle on the road, cracking that occurs on the groove bottom and change over time can be inhibited through a reduction in distortion of the groove bottom at the time of applying an internal pressure, so that the wear rate of the tire can be reduced and partial wear of the tire can be suppressed.

In addition to the use as a belt, the reinforcing member 1 of the present invention may also be used only for local reinforcement of a part of the tread. The reinforcing member 1 of the present invention can be used only for local reinforcement of, for example, the vicinity of the tread ends, the vicinity of the equatorial plane, or the vicinity of the groove bottom. The reinforcing member 1 of the present invention may be used alone, or a plurality thereof may be arranged along the tire width direction or configured to cover the tread portion by spirally winding the plurality of reinforcing members 1 in the circumferential direction while staggering them from one another in the tire width direction.

Next, the tire of the present invention will be described.

The tire of the present invention includes the reinforcing member 1 of the present invention, and examples thereof include tires for passenger vehicles, trucks and buses, construction vehicles, two-wheeled vehicles, airplanes, or agriculture. The tire of the present invention is preferably a tire for passenger vehicles, trucks and buses and construction vehicles. The tire of the present invention is not restricted to a pneumatic tire and may be a solid tire or a non-pneumatic tire as well.

The part to which the reinforcing member 1 of the present invention is applied is not particularly restricted and, as described above, for example, the reinforcing member 1 of the present invention is suitable as a belt that covers the majority of the tread portion. By using the reinforcing member of the present invention as a belt, cracking that occurs on the groove bottom due to a reduction in the groove bottom strain at the time of applying an internal pressure as well as change of the belt with time can be suppressed, so that the wear rate of the tire can be reduced and partial wear of the tire can be inhibited. In addition, for example, the reinforcing member 1 of the present invention may also be used only for local reinforcement of a part of the tread. The reinforcing member 1 of the present invention can be used only for local reinforcement of, for example, the vicinity of the tread ends, the vicinity of the equatorial plane, or the vicinity of the groove bottom. The reinforcing member 1 may be used alone, or a plurality thereof may be arranged along the tire width direction or configured to cover the tread portion by spirally winding the plurality of reinforcing members 1 in the circumferential direction while staggering them from one another in the tire width direction.

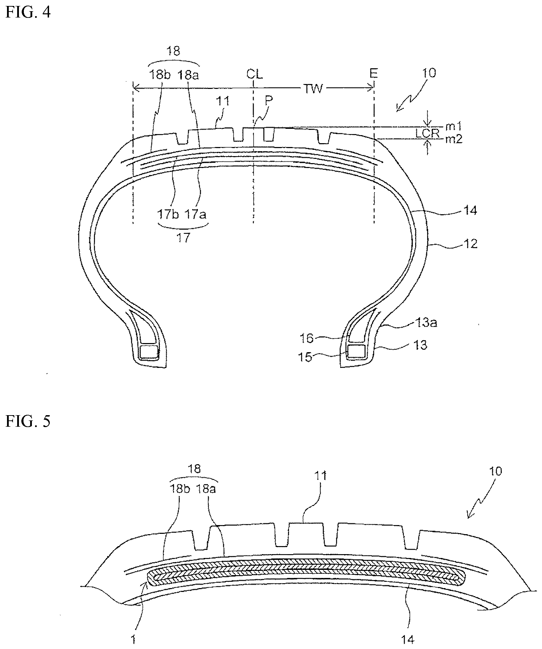

FIG. 4 is a cross-sectional view in the tire width direction illustrating one configuration example of a tire for passenger vehicles. The illustrated tire 10 for passenger vehicles includes: a tread portion 11 which forms a ground-contact part; a pair of side wall portions 12 which continuously extend inward in the tire radial direction on both sides of the tread portion 11; and bead portions 13 which continuously extend on the circumferential inner side of each side wall portion 12. The tread portion 11, the side wall portions 12 and the bead portions 13 are reinforced by a carcass 14, which is composed of a single carcass ply toroidally extending from one bead portion 13 to the other bead portion 13. In the illustrated tire 10 for passenger vehicles, bead cores 15 are each embedded in the pair of the bead portions 13, and the carcass 14 is folded around the bead cores 15 from the inside to the outside of the tire and thereby anchored.

In the tire 10 for passenger vehicles according to the present invention, a variety of configurations including conventional structures can be adopted for the carcass 14, and the carcass 14 may have a radial structure or a bias structure. The carcass 14 is preferably constituted by one or two carcass plys each composed of an organic fiber cord layer. Further, the carcass 14 may have its maximum-width positions in the tire radial direction, for example, on the side closer to the respective bead portions 13 or on the side closer to the tread portion 11. For example, the maximum-width positions of the carcass 14 can be arranged in a range of 50% to 90% from each bead base on the outer side in the tire radial direction with respect to the tire height. Moreover, as illustrated, the carcass 14 is generally and preferably configured to extend between the pair of the bead cores 15 without interruption; however, the carcass 14 can also be constituted by a pair of carcass ply pieces that extend from the respective bead cores 15 and are interrupted in the vicinity of the tread portion 11 (not illustrated).

A variety of structures can be adopted for the folded parts of the carcass 14. For example, the folded ends of the carcass 14 can be positioned on the inner side in the tire radial direction than the upper ends of bead fillers 16, and the folded ends of the carcass 14 may extend further to the outer side in the tire radial direction than the upper ends of the bead fillers 16 or the tire maximum-width positions. In this case, the folded ends of the carcass 14 may extend further to the inner side in the tire width direction than the ends in the tire width direction of a belt 17. Further, in cases where a plurality of carcass plys are arranged, the positions of the folded ends of the carcass 14 in the tire radial direction may be different from each other. Alternatively, the carcass 14 may take a structure in which the carcass 14 is sandwiched by a plurality of bead core members or wound around the bead cores 15, in the absence of folded parts. The end count of the carcass 14 is generally in a range of 10 to 60 cords/50 mm; however, the end count is not restricted thereto.

In the illustrated tire 10 for passenger vehicles, the belt 17 composed of two belt layers 17a and 17b is arranged on the outer side in the tire radial direction of the carcass 14 in the crown region. In the present invention, the reinforcing member 1 can be arranged in place of the belt 17 composed of the two belt layers 17a and 17b. FIG. 5 is a partial cross-sectional view in the tire width direction illustrating the tread portion of the tire for passenger vehicles according to the present invention. In the illustrated tire, three reinforcing layers according to the reinforcing member 1 of the present invention are arranged in place of the two belt layers 17a and 17b. That is, the spiral cord layer 3 of the reinforcing member 1 of the present invention constitutes intersecting belt layers in which cord layers each having a prescribed angle with respect to the tire circumferential direction intersect with each other between the belt layers. Further, the core-material cord layer 2 serves as a second belt layer.

The tire 10 for passenger vehicles according to the present invention may further include other belt layers (not illustrated) in addition to the belt layers composed of the reinforcing member 1 of the present invention. Such other belt layers can be inclined belts which are each composed of a rubberized layer of reinforcing cords and have a prescribed angle with respect to the tire circumferential direction. The other belt layers may be arranged on the outer side or inner side in the tire radial direction of the reinforcing member 1. As reinforcing cords of the inclined belt layers, it is most common to use, for example, metal cords, particularly steel cords; however, organic fiber cord may be used as well. As the steel cords, cords composed of steel filaments containing iron as a main component along with various trace elements, such as carbon, manganese, silicon, phosphorus, sulfur, copper and chromium, can be used.

As the steel cords, in addition to those obtained by twisting a plurality of filaments together, steel monofilament cords may be used as well. Various designs can be adopted for the twist structure of the steel cords, and various cross-sectional structures, twist pitches, twist directions and distances between adjacent steel cords can be applied to the steel cords. Further, cords obtained by twisting filaments of different materials together can also be used. The cross-sectional structure thereof is not particularly restricted, and various twist structures such as single twist, layer twist and multi-twist can be adopted. The inclination angle of the reinforcing cords of the other belt layers is preferably 10° or larger with respect to the tire circumferential direction. Moreover, in cases where such other belt layers are arranged, the width of a maximum-width inclined belt layer having the largest width is preferably 90% to 115%, particularly preferably 100% to 105%, of the tread width.

In the tire for passenger vehicles according to the present invention, a belt reinforcing layer 18 may also be arranged on the outer side in the tire radial direction of the reinforcing member 1 of the present invention. Examples of the belt reinforcing layer 18 include a cap layer 18a arranged over the entire width or more of the reinforcing member 1, and a layered layer 18b arranged in the regions that cover the respective ends of the reinforcing member 1. The cap layer 18a and the layered layer 18b may each be arranged alone, or both of them may be arranged in combination. Further, two or more cap layers and/or two or more layered layers may be arranged in combination.

Various materials can be used as the reinforcing cords of the cap layer 18a and the layered layer 18b, and representative examples thereof include rayon, nylon, polyethylene naphthalate (PEN), polyethylene terephthalate (PET), aramid, glass fibers, carbon fibers, and steel. From the standpoint of weight reduction, the reinforcing cords are particularly preferably organic fiber cords. As the reinforcing cords, monofilament cords, cords obtained by twisting a plurality of filaments together, or hybrid cords obtained by twisting filaments of different materials together can be used as well. Further, in order to increase the breaking strength, wavy cords may also be used as the reinforcing cords. Similarly, for example, high-elongation cords having an elongation at break of 4.5% to 5.5% may be used to increase the breaking strength.

In cases where the cap layer 18a is arranged in the tire 10 for passenger vehicles according to the present invention, the width of the cap layer 18a may be wider or narrower than the inclined belt layers. For example, the width of the cap layer 18a can be 90% to 110% of the width of the maximum-width inclined belt layer having the largest width among the inclined belt layers. The end count of the cap layer and that of the layered layer are generally in a range of 20 to 60 cords/50 mm; however, the end counts are not restricted thereto. For example, the cap layer 18a may be imparted with distribution in the tire width direction in terms of rigidity, material, number of layers, cord density and the like and, for example, the number of layers can be increased only at the ends in the tire width direction, or only in the central part.

From the production standpoint, it is particularly advantageous to configure the cap layer 18a and the layered layer 18b as spiral layers. In this case, these layers may be constituted by strip-like cords in which a plurality of core wires arranged in parallel to each other in a plane are bundled together by a wrapping wire with the parallel arrangement being maintained.

With regard to the shape of the tread portion 11 in the tire 10 for passenger vehicles according to the present invention that has a narrow width and a large diameter, when, at a cross-section in the tire width direction, a straight line that runs through a point P on the tread surface in the tire equatorial plane CL and is parallel to the tire width direction is defined as m1, a straight line that runs through a ground-contact end E and is parallel to the tire width direction is defined as m2, the distance between the straight lines m1 and m2 in the tire radial direction is defined as fall height LCR and the tread width of the tire is defined as TW, the ratio LCR/TW is preferably 0.045 or lower. By controlling the ratio LCR/TW in this range, the crown portion of the tire is flattened (planarized), so that the ground-contact area is increased and the input (pressure) from the road surface is thus alleviated, whereby the deflection rate in the tire radial direction can be reduced and the durability and the wear resistance of the tire can be improved. Further, the tread ends are preferably smooth.

The tread pattern may be a full-lug pattern, a rib-like land portion dominant parrern, a block pattern or an asymmetrical pattern, and may have a designated rotation direction.

The full-lug pattern may be a pattern that includes widthwise grooves extending in the tire width direction from the vicinity of the equatorial plane to the ground-contact ends and, in this case, the pattern is not required to have a circumferential groove. Such a pattern mainly constituted by lateral grooves is capable of effectively exerting on-snow performance in particular.

The rib-like land portion dominant pattern is a pattern mainly constituted by rib-like land portions that are partitioned in the tire width direction by at least one circumferential groove or by a circumferential groove(s) and tread ends. The term "rib-like land portion" used herein refers to a land portion that extends in the tire circumferential direction without any lateral groove across the tire width direction; however, the rib-like land portion may have a sipe and a lateral groove terminating within each rib-like land portion. Since a radial tire has a high ground-contact pressure particularly when used at a high internal pressure, it is believed that the ground-contact performance on a wet road surface is improved by increasing the circumferential shear rigidity. The rib-like land portion dominant pattern can be, for example, a tread pattern in which a region that is centered on the equatorial plane and corresponds to 80% of the tread width consists of only rib-like land portions, namely a pattern having no lateral groove. In such a pattern, the drainage performance in this region largely contributes to wet performance in particular.

The block pattern is a pattern having block land portions that are partitioned by circumferential grooves and widthwise grooves, and a tire having such a block pattern exhibits excellent basic on-ice performance and on-snow performance.

The asymmetrical pattern is a pattern in which tread patterns on each side of the equatorial plane are asymmetrical. For example, in the case of a tire having a designated mounting direction, the negative ratio may be different between the tire halves on the inner side and the outer side in the vehicle mounting direction that are divided by the equatorial plane, or the tire may be configured to have different numbers of circumferential grooves between the tire halves on the inner side and the outer side in the vehicle mounting direction that are divided by the equatorial plane.

The tread rubber is not particularly restricted, and any conventionally used rubber or a foamed rubber can be used. The tread rubber may be constituted by a plurality of rubber layers that are different from each other along the tire radial direction, and the tread rubber may have, for example, a so-called cap-base structure. As the plurality of rubber layers, those that are different from each other in terms of loss tangent, modulus, hardness, glass transition temperature, material and the like can be used. The thickness ratio of the plurality of rubber layers in the tire radial direction may vary along the tire width direction and, for example, only the bottom of the circumferential grooves may be constituted by a rubber layer(s) different from the surroundings.

Alternatively, the tread rubber may be constituted by a plurality of rubber layers that are different from each other in the tire width direction, and the tread rubber may have a so-called divided tread structure. As the plurality of rubber layers, those that are different from each other in terms of loss tangent, modulus, hardness, glass transition temperature, material and the like can be used. The length ratio of the plurality of rubber layers in the tire width direction may vary along the tire radial direction, and only a limited region, such as only the vicinity of the circumferential grooves, only the vicinity of the tread ends, only the vicinity of the shoulder land portions or only the vicinity of the center land portion, may be constituted by a rubber layer(s) different from the surroundings.

In the tire 10 for passenger vehicles according to the present invention, a known structure can be adopted also for the side wall portions 12. For example, the tire maximum-width positions can be arranged in a range of 50% to 90% from each bead base on the outer side in the tire radial direction with respect to the tire height. Further, a structure having a rim guard may be adopted as well. In the tire 10 for passenger vehicles according to the present invention, it is preferred that a recess 13a, which comes into contact with the rim flange, be formed.

Moreover, a variety of structures, such as a circular shape and a polygonal shape, can be adopted for the bead cores 15. It is noted here that, as described above, the bead portions 13 may have a structure in which the carcass 14 is wound on the bead cores 15, or a structure in which the carcass 14 is sandwiched by a plurality of bead core members. In the illustrated tire 10 for passenger vehicles, bead fillers 16 are arranged on the outer side in the tire radial direction of the respective bead cores 15; however, the bead fillers 16 may be omitted in the tire 10 for passenger vehicles according to the present invention.

In the tire for passenger vehicles according to the present invention, usually, an inner liner may be arranged in the innermost layer of the tire, although it is not illustrated in the drawing. The inner liner may be constituted by a rubber layer mainly composed of butyl rubber, or a film layer comprising a resin as a main component. Further, although not illustrated in the drawing, a porous member may be arranged and an electrostatic flocking process may be performed on the tire inner surface for the purpose of reducing cavity resonance noise. Moreover, on the tire inner surface, a sealant member for inhibition of air leakage upon puncture of the tire may be arranged as well.

The use of the tire 10 for passenger vehicles is not particularly restricted. The tire 10 can be suitably used as a summer tire, an all-season tire, or a winter tire. It is also possible to use the tire 10 as a tire for passenger vehicles that has a special structure, such as a side-reinforced run-flat tire having a crescent-shaped reinforcing rubber layer in the side wall portions 12, or a studded tire.

Next, the tire for trucks and buses according to the present invention will be described.

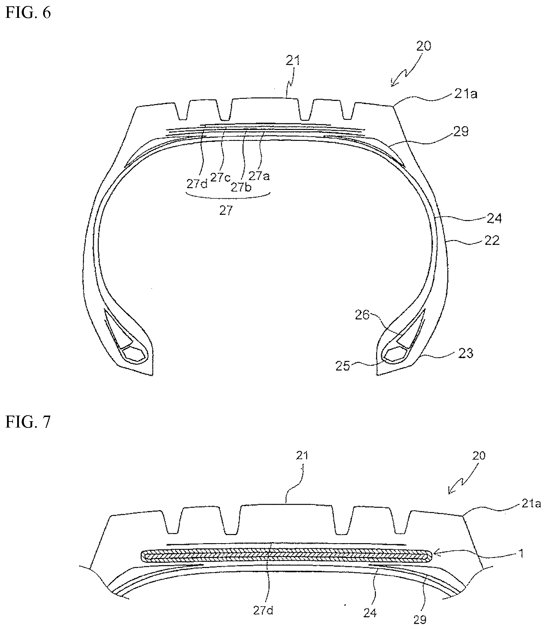

FIG. 6 is a cross-sectional view in the tire width direction illustrating one configuration example of the tire for trucks and buses. The illustrated tire 20 for trucks and buses includes a tread portion 21 which forms a ground-contact part, a pair of side wall portions 22 which continuously extend inward in the tire radial direction on both sides of the tread portion 21 and bead portions 23 which continuously extend on the inner side in the circumferential direction of each side wall portion 22. The tread portion 21, the side wall portions 22 and the bead portions 23 are reinforced by a carcass 24, which is composed of a single carcass ply toroidally extending from one bead portion 23 to the other bead portion 23. In the illustrated tire 20 for trucks and buses, bead cores 25 are each embedded in the pair of the bead portions 23, and the carcass 24 is folded around the bead cores 25 from the inside to the outside of the tire and thereby anchored.

In the tire 20 for trucks and buses according to the present invention, a variety of cpnfigurations including conventional structures can be adopted for the carcass 24, and the carcass 24 may have a radial structure or a bias structure. The carcass 24 is preferably constituted by one or two carcass plys each composed of a steel cord layer. Further, the carcass 24 may have its maximum-width positions in the tire radial direction, for example, on the side closer to the respective bead portions 23 or on the side closer to the tread portion 21. For example, the maximum-width positions of the carcass 24 can be arranged in a range of 50% to 90% from each bead base on the outer side in the tire radial direction with respect to the tire height. Moreover, as illustrated, the carcass 24 is generally and preferably configured to extend between the pair of the bead cores 25 without interruption; however, the carcass 24 can also be constituted by a pair of carcass pieces that extend from the respective bead cores 25 and are interrupted in the vicinity of the tread portion 21.

A variety of structures can be adopted for the folded parts of the carcass 24. For example, the folded ends of the carcass 24 can be positioned on the inner side in the tire radial direction than the upper ends of bead fillers 26, and the carcass folded ends may extend further on the outer side in the tire radial direction than the upper ends of the bead fillers 26 or the tire maximum-width positions. In this case, the folded ends of the carcass 24 may extend to the inner side in the tire width direction than the ends in the tire width direction of a belt 27. Further, in cases where a plurality of carcass plys are arranged, the positions of the folded ends of the carcass 24 in the tire radial direction may be different from each other. Alternatively, the carcass 24 may take a structure in which the carcass 24 is sandwiched by a plurality of bead core members or wound around the bead cores 25, in the absence of folded parts. The end count of the carcass 24 is generally in a range of 10 to 60 cords/50 mm; however, the end count is not restricted thereto.

In the illustrated tire 20 for trucks and buses, the belt 27 composed of four belt layers 27a to 27d is arranged on the outer side in the tire radial direction of the carcass 24 in the crown region. In the tire 20 for trucks and buses according to the present invention, the reinforcing member 1 can be arranged in place of, among the four belt layers 27a to 27d, the first belt layer 27a to the third belt layer 27c that are positioned on the inner side in the tire radial direction. FIG. 7 is a partial cross-sectional view in the tire width direction illustrating the tread portion of the tire for trucks and buses according to the present invention. That is, the spiral cord layer 3 of the reinforcing member 1 of the present invention constitutes the first belt layer 27a and the third belt layer 27c, which are intersecting belts in which cord layers each having a prescribed angle with respect to the tire circumferential direction intersect with each other between the belt layers. Further, the core-material cord layer 2 serves as a second belt layer 27b.

The tire 20 for trucks and buses according to the present invention may further include, as illustrated, other belt layers (a fourth belt layer 27d in the illustrated example) in addition to the belt layers composed of the reinforcing member of the present invention. Such other belt layers can be inclined belts which are each composed of a rubberized layer of reinforcing cords and have a prescribed angle with respect to the tire circumferential direction. As the reinforcing cords of the inclined belt layers, it is most common to use, for example, metal cords, particularly steel cords; however, organic fiber cords may be used as well. As the steel cords, cords composed of steel filaments containing iron as a main component along with various trace elements, such as carbon, manganese, silicon, phosphorus, sulfur, copper and chromium, can be used.

As the steel cords, in addition to those cords obtained by twisting a plurality of filaments together, steel monofilament cords may be used as well. Various designs can be adopted for the twist structure of the steel cords, and various cross-sectional structures, twist pitches, twist directions and distances between adjacent steel cords can be applied to the steel cords. Further, cords obtained by twisting filaments of different materials together can also be used. The cross-sectional structure thereof is not particularly restricted, and various twist structures such as single twist, layer twist and multi-twist can be adopted. The inclination angle of the reinforcing cords of the other belt layers is preferably 0° or larger with respect to the tire circumferential direction. Moreover, in cases where such other belt layers are arranged, the width of a maximum-width inclined belt layer having the largest width is preferably 40% to 115%, particularly preferably 50% to 70%, of the tread width. On the inner side in the tire radial direction of each end of the belt 27, it is preferred to arrange a belt under-cushion rubber 29. By this, strain and temperature applied to the ends of the belt 27 are reduced, so that the tire durability can be improved.

Further, in the tire 20 for trucks and buses according to the present invention, on the outer side in the tire radial direction of the reinforcing member 1 of the present invention and other belt layer 27d, a circumferential cord layer (not illustrated) may be arranged as well.

In the tire 20 for trucks and buses according to the present invention, a known structure can be adopted also for the side wall portions 22. For example, the tire maximum-width positions can be arranged in a range of 50% to 90% from each bead base on the outer side in the tire radial direction with respect to the tire height. In the tire 20 for trucks and buses according to the present invention, it is preferred that the side wall portions 22 be each formed as a smooth curve having a convex shape in the tire width direction without a recess that comes into contact with the rim flange, which is different from the tire for passenger vehicles.

Moreover, a variety of structures, such as a circular shape and a polygonal shape, can be adopted for the bead cores 25. It is noted here that, as described above, the bead portions 23 may have a structure in which the carcass 24 is wound on the bead cores 25, or a structure in which the carcass 24 is sandwiched by a plurality of bead core members. In the illustrated tire 20 for trucks and buses, bead fillers 26 are arranged on the outer side in the tire radial direction of the respective bead cores 25, and the bead fillers 26 may each be constituted by a plurality of rubber members that are separated from each other in the tire radial direction.

In the tire 20 for trucks and buses according to the present invention, the tread pattern may be a pattern mainly constituted by rib-like land portions, a block pattern or an asymmetrical pattern, and the tread pattern may have a designated rotation direction.

The rib-like land portion dominant pattern is a pattern which is mainly constituted by rib-like land portions that are partitioned in the tire width direction by at least one circumferential groove or by a circumferential groove(s) and tread ends. The term "rib-like land portion" used herein refers to land portions that extend in the tire circumferential direction without any lateral groove across the tire width direction; however, the rib-like land portions may have sipes and lateral grooves terminating within each rib-like land portion. Since a radial tire has a high ground-contact pressure particularly when used at a high internal pressure, it is believed that the ground-contact performance on wet road surfaces is improved by increasing the circumferential shear rigidity. The rib-like land portion dominant pattern can be, for example, a tread pattern in which a region that is centered on the equatorial plane and corresponds to 80% of the tread width consists of only rib-like land portions, namely a pattern having no lateral groove. In such a pattern, the drainage performance in this region largely contributes to wet performance in particular.

The block pattern is a pattern having block land portions that are partitioned by circumferential grooves and widthwise grooves, and a tire having such a block pattern exhibits excellent basic on-ice performance and on-snow performance.

The asymmetrical pattern is a pattern in which tread patterns on each side of the equatorial plane are asymmetrical. For example, in the case of a tire having a designated mounting direction, the negative ratio may be different between the tire halves on the inner side and the outer side in the vehicle mounting direction that are divided by the equatorial plane, or the tire may be configured to have different numbers of circumferential grooves between the tire halves on the inner side and the outer side in the vehicle mounting direction that are divided by the equatorial plane.

The tread rubber is not particularly restricted, and any conventionally used rubber can be used. The tread rubber may be constituted by a plurality of rubber layers that are different from each other along the tire radial direction, and the tread rubber may have, for example, a so-called cap-base structure. As the plurality of rubber layers, those that are different from each other in terms of loss tangent, modulus, hardness, glass transition temperature, material and the like can be used. The thickness ratio of the plurality of rubber layers in the tire radial direction may vary along the tire width direction and, for example, only the bottom of the circumferential grooves may be constituted by a rubber layer(s) different from the surroundings.

Alternatively, the tread rubber may be constituted by a plurality of rubber layers that are different from each other in the tire width direction, and the tread rubber may have a so-called divided tread structure. As the plurality of rubber layers, those that are different from each other in terms of loss tangent, modulus, hardness, glass transition temperature, material and the like can be used. The length ratio of the plurality of rubber layers in the tire width direction may vary along the tire radial direction, and only a limited region, such as only the vicinity of the circumferential grooves, only the vicinity of the tread ends, only the vicinity of the shoulder land portions or only the vicinity of the center land portion, may be constituted by a rubber layer(s) different from the surroundings. Further, in the tread portion, it is preferred that a corner 21a be formed at each tire width-direction end.

Next, the tire for construction vehicles according to the present invention will be described.

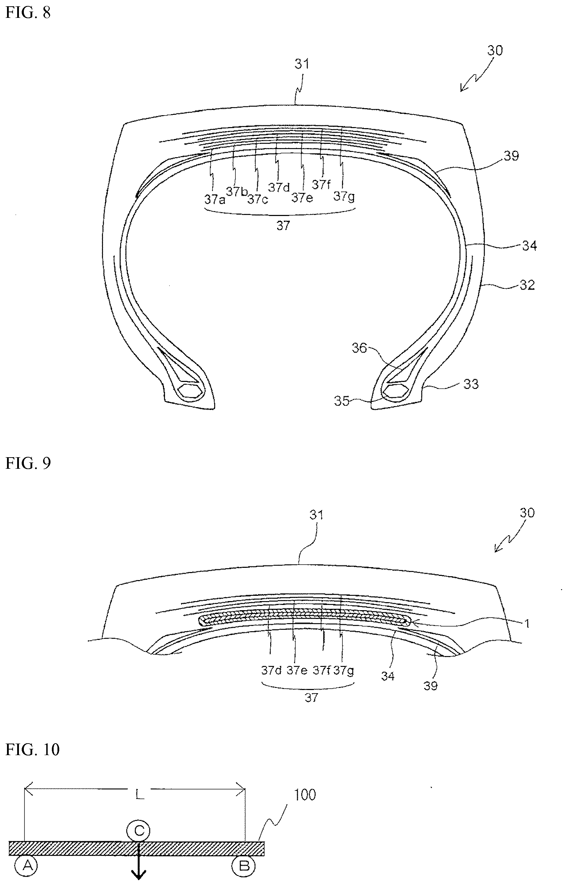

FIG. 8 is a cross-sectional view in the tire width direction illustrating one configuration example of a tire for construction vehicles. The illustrated tire 30 for construction vehicles includes a tread portion 31 which forms a ground-contact part, a pair of side wall portions 32 which continuously extend inward in the tire radial direction on both sides of the tread portion 31 and bead portions 33 which continuously extend on the circumferential inner side of each side wall portion 32. The tread portion 31, the side wall portions 32 and the bead portions 33 are reinforced by a carcass 34, which is composed of a single carcass ply toroidally extending from one bead portion 33 to the other bead portion 33. In the illustrated tire 30 for construction vehicles, bead cores 35 are each embedded in the pair of the bead portions 33, and the carcass 34 is folded around the bead cores 35 from the inside to the outside of the tire and thereby anchored.

In the tire for construction vehicles according to the present invention, a variety of configurations including conventional structures can be adopted for the carcass 34, and the carcass 34 may have a radial structure or a bias structure. The carcass 34 is preferably constituted by one or two carcass plys each composed of a steel cord layer. Further, the carcass 34 may have its maximum-width positions in the tire radial direction, for example, on the side closer to the respective bead portions 33 or on the side closer to the tread portion 31. For example, the maximum-width positions of the carcass 34 can be arranged in a range of 50% to 90% from each bead base on the outer side in the tire radial direction with respect to the tire height. Moreover, as illustrated, the carcass 34 is generally and preferably configured to extend between the pair of the bead cores 35 without interruption; however, the carcass 34 can also be constituted by a pair of carcass pieces that extend from the respective bead cores 35 and are interrupted in the vicinity of the tread portion 31.

A variety of structures can be adopted for the folded parts of the carcass 34. For example, the folded ends of the carcass 34 can be positioned on the inner side in the tire radial direction than the upper ends of bead fillers 36, and the folded ends of the carcass 34 may extend further on the outer side in the tire radial direction than the upper ends of the bead fillers 36 or the tire maximum-width positions. In this case, the folded ends of the carcass 34 may extend to the inner side in the tire width direction than the ends in the tire width direction of a belt 37. Further, in cases where plurality of carcass plys are arranged, the positions of the folded ends of the carcass 34 in the tire radial direction may be different from each other. Alternatively, the carcass 34 may take a structure in which the carcass 34 is sandwiched by a plurality of bead core members or wound around the bead cores 35, in the absence of folded parts. The end count of the carcass 34 is generally in a range of 10 to 60 cords/50 mm; however, the end count is not restricted thereto.

In the illustrated tire 30 for construction vehicles, the belt 37 composed of seven belt layers 37a to 37g is arranged on the outer side in the tire radial direction of the carcass 34 in the crown region. Generally, a tire for construction vehicles includes 4 to 6 belt layers and, when the tire for construction vehicles includes 6 belt layers, a first and a second belt layers constitute an inner intersecting belt layer group; a third and a fourth belt layers constitute a middle intersecting belt layer group; and a fifth and a sixth belt layers constitute an outer intersecting belt layer group. The tire for construction vehicles according to the present invention has a structure in which at least one of the inner, middle and outer intersecting belt layer groups is replaced with the reinforcing member of the present invention.

In the tread width direction, the width of the inner intersecting belt layer group can be 25% to 70% of the width of the tread surface; the width of the middle intersecting belt layer group can be 55% to 90% of the width of the tread surface; and the width of the outer intersecting belt layer group can be 60% to 110% of the width of the tread surface. Further, in the tread planar view, the inclination angle of the belt cords of the inner intersecting belt layer group can be 70° to 85° with respect to the carcass cords; the inclination angle of the belt cords of the middle intersecting belt layer group can be 50° to 75° with respect to the carcass cords; and the inclination angle of the belt cords of the outer intersecting belt layer group can be 70° to 85° with respect to the carcass cords.

FIG. 9 is a partial cross-sectional view in the tire width direction illustrating a tread portion of a tire for construction vehicles according to the present invention. In the illustrated tire 30 for construction vehicles, the reinforcing member 1 of the present invention is arranged in place of the first belt layer 37a to the third belt layer 37c that constitute the inner intersecting belt layer group. That is, the spiral cord layer 3 of the reinforcing member 1 of the present invention constitutes the first belt layer 37a and the third belt layer 37c, which are intersecting belts in which cord layers each having a prescribed angle with respect to the tire circumferential direction intersect with each other between the belt layers. Further, the core-material cord layer 2 constitutes the second belt layer 37b. In the illustrated example, the inner intersecting belt layer group is replaced with the reinforcing member 1 of the present invention; however, the tire for construction vehicles according to the present invention is not restricted thereto. The middle intersecting belt layer group may be replaced with the reinforcing member 1 of the present invention, or the outer intersecting belt layer group may be replaced with the reinforcing member 1 of the present invention. In the case of a tire for construction vehicles that includes 4 belt layers, the first and the second belt layers may be replaced with the reinforcing member of the present invention, or the third and the fourth belt layers may be replaced with the reinforcing member of the present invention.

The tire 30 for construction vehicles according to the present invention may further include, as illustrated, other belt layers (fourth to seventh belt layers) in addition to the belt layers composed of the reinforcing member 1 of the present invention. Such other belt layers can be inclined belts which are each composed of a rubberized layer of reinforcing cords and have a prescribed angle with respect to the tire circumferential direction. As reinforcing cords of the inclined belt layers, it is most common to use, for example, metal cords, particularly steel cords; however, organic fiber cords may be used as well. As the steel cords, cords that are composed of steel filaments containing iron as a main component along with various trace elements, such as carbon, manganese, silicon, phosphorus, sulfur, copper and chromium, can be used.

As the steel cords, in addition to those cords obtained by twisting a plurality of filaments together, steel monofilament cords may be used as well. Various designs can be adopted for the twist structure of the steel cords, and various cross-sectional structures, twist pitches, twist directions and distances between adjacent steel cords can be applied to the steel cords. Further, cords obtained by twisting filaments of different materials together can also be used. The cross-sectional structure thereof is not particularly restricted, and various twist structures such as single twist, layer twist and multi-twist can be adopted. The inclination angle of the reinforcing cords of the other belt layers is preferably 10° or larger with respect to the tire circumferential direction. Moreover, in cases where such other belt layers are arranged, the width of a maximum-width inclined belt layer having the largest width is preferably 90% to 115%, particularly preferably 100% to 105%, of the tread width. On the inner side in the tire radial direction of each end of the belt 37, it is preferred to arrange a belt under-cushion rubber 39. By this, strain and temperature applied to the ends of the belt 37 are reduced, so that the tire durability can be improved.

In the tire 30 for construction vehicles according to the present invention, a known structure can be adopted also for the side wall portions 32. For example, the tire maximum-width positions can be arranged in a range of 50% to 90% from each bead base on the outer side in the tire radial direction with respect to the tire height. In the tire 30 for construction vehicles according to the present invention, it is preferred that a recess that comes into contact with the rim flange be formed.

Moreover, a variety of structures, such as a circular shape and a polygonal shape, can be adopted for the bead cores 35. It is noted here that, as described above, the bead portions 33 may have a structure in which the carcass 34 is wound on the bead cores 35, or a structure in which the carcass 34 is sandwiched by a plurality of bead core members. In the illustrated tire 30 for construction vehicles, bead fillers 36 are arranged on the outer side in the tire radial direction of the respective bead cores 35, and the bead fillers 36 may each be constituted by a plurality of rubber members that are separated from each other in the tire radial direction.

In the tire 30 for construction vehicles according to the present invention, the tread pattern may be a lug pattern, a block pattern or an asymmetrical pattern and may have a designated rotation direction.

The lug pattern may be a pattern that includes widthwise grooves extending in the tire width direction from the vicinity of the equatorial plane to the ground-contact ends and, in this case, the pattern is not required to have a circumferential groove.

The block pattern is a pattern having block land portions that are partitioned by circumferential grooves and widthwise grooves. Particularly, in the case of a tire for construction vehicles, the blocks are preferably large from the durability standpoint and, for example, the width of each block measured in the tire width direction is preferably 25% to 50% of the tread width.

The asymmetrical pattern is a pattern in which tread patterns on each side of the equatorial plane are asymmetrical. For example, in the case of a tire having a designated mounting direction, the negative ratio may be different between the tire halves on the inner side and the outer side in the vehicle mounting direction that are divided by the equatorial plane, or the tire may be configured to have different numbers of circumferential grooves between the tire halves on the inner side and the outer side in the vehicle mounting direction that are divided by the equatorial plane.

The tread rubber is not particularly restricted, and any conventionally used rubber can be used. The tread rubber may be constituted by a plurality of rubber layers that are different from each other along the tire radial direction, and the tread rubber may have, for example, a so-called cap-base structure. As the plurality of rubber layers, those that are different from each other in terms of loss tangent, modulus, hardness, glass transition temperature, material and the like can be used. The thickness ratio of the plurality of rubber layers in the tire radial direction may vary along the tire width direction and, for example, only the bottom of the circumferential grooves may be constituted by a rubber layer(s) different from the surroundings.

Alternatively, the tread rubber may be constituted by a plurality of rubber layers that are different from each other in the tire width direction, and the tread rubber may have a so-called divided tread structure. As the plurality of rubber layers, those that are different from each other in terms of loss tangent, modulus, hardness, glass transition temperature, material and the like can be used. The length ratio of the plurality of rubber layers in the tire width direction may vary along the tire radial direction, and only a limited region, such as only the vicinity of the circumferential grooves, only the vicinity of the tread ends, only the vicinity of the shoulder land portions or only the vicinity of the center land portion, may be constituted by a rubber layer(s) different from the surroundings.

In the tire 30 for construction vehicles according to the present invention, the thicker the rubber gauge of the tread portion 31, the more preferred it is from the durability standpoint, and the rubber gauge of the tread portion 31 is preferably 1.5% to 4%, more preferably 2% to 3%, of the tire outer diameter. Further, the ratio of the groove area with respect to the ground-contact surface of the tread portion 31 (negative ratio) is preferably not higher than 20%. The reason for this is because the tire 30 for construction vehicles is primarily used at low speed in dry areas and, therefore, it is not necessary to have a high negative ratio for drainage performance. As for the size of the tire for construction vehicles, for example, the rim diameter is not less than 20 inches, particularly not less than 40 inches for a large-size tire.

### EXAMPLES

The present invention will now be described in more detail by way of examples thereof.

In accordance with the conditions shown in Table below, rubber-cord composites of Examples and Comparative Examples were each prepared by arranging six reinforcing cords composed of carbon fiber cords (PAN-based carbon fibers, specific gravity = 1.74) in parallel to one another and subsequently coating the reinforcing cords with a rubber.

Further, reinforcing members of Examples and Comparative Examples were each prepared by spirally winding each of the thus obtained rubber-cord composites on a single core-material cord layer and thereby forming a spiral cord layer. As core-material cords of the core-material cord layer, steel cords having a 1×3 structure composed of steel filaments of 0.33 mm in diameter were used. The end count of the core-material cords in the core-material cord layer was 25 cords/50 mm, the inclination angle of the core-material cord layer was 50° with respect to the longitudinal direction, and the core-material cord layer had a thickness of 2 mm. Moreover, the inclination angle of the reinforcing cords of the spiral cord layer was set at 16° with respect to the longitudinal direction of the core-material cord layer.

For each of the thus obtained reinforcing members, the durability, the fatigue resistance and the cord winding workability were evaluated by the following procedures. The results thereof are shown together in Table below.

### <Durability>

The durability was evaluated as follows.

The reinforcing members of Examples and Comparative Examples were each arranged in place of a belt composed of two belt layers to produce tires for passenger vehicles as illustrated in FIG. 4 at a tire size of 275/80R22.5. The thus obtained test tires were each mounted on an application rim and then subjected to 50,000-km driving at a speed of 80 km/h under a prescribed internal pressure and a prescribed load, after which the reinforcing cords were removed from the tires to measure the strength retention rate. The thus obtained results are indicated as index values, taking the measured value of Comparative Example 1 as 100. A larger index value indicates superior durability.

### <Fatigue Resistance>

As for the fatigue resistance, the test tires were each subjected to a laboratory test of 100,000-km driving at a speed of 60 km/h under a prescribed internal pressure and 120% of a prescribed load. Then, the cords were removed from the spiral cord layer of each tire, and the strength retention rate with respect to a brand new cord was measured for a part having the highest strength retention rate. The thus obtained results are indicated as index values, taking the strength retention rate of Comparative Example 1 as 100. A larger index value indicates higher fatigue resistance.

The term "application rim" used herein refers to a rim defined in the below-described standard according to the tire size. The term "prescribed internal pressure" refers to an air pressure that is defined in the below-described standard according to the maximum load capacity, and the term "prescribed load" refers to the maximum mass that is allowable on a tire as defined in the below-described standard. Further, the term "standard" used herein refers to an industrial standard that is valid in each region where the tire is manufactured or used, such as "The Tire and Rim Association Inc. Year Book" in the U.S., "The European Tyre and Rim Technical Organisation Standard Manual" in Europe, or "JATMA Year Book" of Japan Automobile Tyre Manufacturers Association in Japan.

### <Cord Winding Workability>

The cord winding workability was evaluated as follows.

A strip was wound on the core-material cord layer and the end thereof was press-bonded using a stitcher, after which the rubber adhesion and gap between the core-material cord layer and the strip were checked. An evaluation of o was given when the strip was wound without any gap; an evaluation of Δ was given when a gap of about 1 mm was generated; or an evaluation of × was given when a larger gap was generated.

Further, the bending stress (stiffness) of each rubber-cord composite per 50 mm width in an unvulcanized state was measured as described below by a 3-point bending test in accordance with JIS K7074.

That is, first, as illustrated in FIG. 10, each rubber-cord composite sample 100 in an unvulcanized state was set on two jigs A and B arranged at a distance L of 60 mm, without the ends of the sample 100 being fixed. The cord direction was aligned in parallel to the two jigs A and B. Next, a weight C was brought down on a longitudinal central part of the rubber-cord composite sample 100 at a rate of 10 mm/min to apply a bending input. The measurement was performed once the sample started to show a stress, and the maximum stress shown at a point when the weight C was brought down by 15 cm was defined as the value of the bending stress.

**[Table 1]**

| | | Example 1 | Example 2 | Example 3 | Example 4 | Example 5 | Example 6 | Comparative Example 1 | Comparative Example 2 |
|---|---|---|---|---|---|---|---|---|---|
| Material | | CF | CF | CF | CF | CF | CF | CF | steel |
| Conditions of reinforcing cord | Modulus A per cord (GPa) | 15 | 23 | 75 | 200 | 96 | 180 | 10 | 100 |
| | End count B (cords/50 mm) | 70 | 45 | 30 | 20 | 21 | 20 | 80.0 | 40.0 |
| | Cord diameter C (mm) | 0.6 | 1.0 | 1.5 | 2.2 | 2.2 | 2.2 | 0.4 | 0.4 |
| | Final twist number E (times/10 cm) | 26 | 16 | 11 | 8 | 21 | 14 | 10.0 | - |
| | Cord total fineness F (dtex) | 2,000 | 5,000 | 12,000 | 24,000 | 24,000 | 24,000 | 1,000 | 980 |
| | Rubber-cord composite modulus X (GPa) | 1,050 | 1,035 | 2,250 | 4,000 | 2,016 | 3,600 | 800 | 3,500 |
| | Cord interval Y (mm) | 0.11 | 0.11 | 0.16 | 0.27 | 0.18 | 0.27 | 0.23 | 0.87 |
| | Twisting coefficient Z | 0.31 | 0.30 | 0.32 | 0.33 | 0.87 | 0.58 | 0.09 | - |
| | Bending stress per width of 50 mm (N) | 2.0 | 13 | 20 | 26 | 28 | 25 | 1.0 | 81 |
| Fatigue resistance (index) | | 106 | 108 | 109 | 111 | 112 | 116 | 100 | could not be produced |
| Belt durability (index) | | 106 | 109 | 111 | 113 | 113 | 118 | 100 | could not be produced |
| Cord winding workability | | ○ | ○ | ○ | ○ | ○ | ○ | Δ | × |

As shown in Table above, it was confirmed that the present invention can provide: a rubber-cord composite that improves the strength and modulus of an entire belt layer without causing any problem attributed to reinforcing cords and can thereby further improve the durability of a tire as compared to conventional tires; a tire reinforcing member; and a tire using the same.

### DESCRIPTION OF SYMBOLS

- 1:: tire reinforcing member (reinforcing member)
- 2:: core-material cord layer
- 2a:: core-material cord
- 3:: spiral cord layer
- 3a:: reinforcing cord
- 10:: tire for passenger vehicles
- 11, 21, 31:: tread portion
- 12, 22, 32:: side wall portion
- 13, 23, 33:: bead portion
- 13a:: recess
- 14, 24, 34:: carcass
- 15, 25, 35:: bead core
- 16, 26, 36:: bead filler
- 17, 27, 37:: belt
- 17a, 17b, 27a to 27d, 37a to 37g:: belt layer
- 18:: belt reinforcing layer
- 18a:: cap layer
- 18b:: layered layer
- 20:: tire for trucks and buses
- 21a:: corner
- 29, 39:: belt under-cushion rubber
- 30:: tire for construction vehicles
- 100:: rubber-cord composite sample

## Claims

1. A rubber-cord composite to be used for a spiral cord layer in a tire reinforcing member that comprises at least one core-material cord layer and the spiral cord layer comprising a reinforcing cord spirally wound on the core-material cord layer, wherein
the reinforcing cord is singly or plurally arranged in parallel and coated with a rubber,
the reinforcing cord comprises a nonmetallic fiber, and
when the modulus per the reinforcing cord is A (GPa), the cord end counts of the rubber-cord composite per 50 mm width is B (cords/50 mm), the thickness of the reinforcing cord is C (mm), the specific gravity of the reinforcing cord is D (g/cm³), the final twist number of the reinforcing cord is E (times/10 cm), and the total fineness of the reinforcing cord is F (dtex):
a modulus X of the rubber-cord composite per 50 mm width represented by X = A × B is 1,000 GPa or higher;
a cord interval Y in a direction perpendicular to the cord longitudinal direction between adjacent reinforcing cords in the rubber-cord composite represented by Y = (50 - B × C)/B is 0.1 mm to 5 mm; and
a twisting coefficient Z of the reinforcing cord is represented by Z = tanθ = E × √(0.125 × F/D)/1,000 is higher than 0.3.

2. The rubber-cord composite according to claim 1, wherein the total fineness F of the reinforcing cord is 1,000 dtex to 30,000 dtex.

3. The rubber-cord composite according to claim 2, wherein the total fineness F of the reinforcing cord is 5,000 dtex to 30,000 dtex.

4. The rubber-cord composite according to claim 3, wherein the total fineness F of the reinforcing cord is 9,000 dtex to 30,000 dtex.

5. The rubber-cord composite according to any one of claims 1 to 4, wherein the nonmetallic fiber is at least one selected from aramid fibers, polyketone fibers, poly-p-phenylene benzobisoxazole fibers, polyarylate fibers, basalt fibers, carbon fibers, and glass fibers.

6. The rubber-cord composite according to claim 5, wherein the nonmetallic fiber is either or both of a carbon fiber and a glass fiber.

7. The rubber-cord composite according to any one of claims 1 to 6, wherein the modulus X is 2,000 GPa to 6,000 GPa.

8. The rubber-cord composite according to any one of claims 1 to 7, having a bending stress per 50 mm width measured by a 3-point bending test in accordance with JIS K7074, of 0.1 N to 80 N in an unvulcanized state.

9. A tire reinforcing member comprising:
at least one core-material cord layer; and
a spiral cord layer comprising a reinforcing cord spirally wound on the core-material cord layer,
wherein the spiral cord layer is formed using the rubber-cord composite according to any one of claims 1 to 8.

10. The tire reinforcing member according to claim 9, wherein
a core-material cord of the core-material cord layer is composed of a metal cord, and
the core-material cord has an inclination angle of 40° to 90° with respect to the longitudinal direction of the core-material cord layer.

11. The tire reinforcing member according to claim 9 or 10, wherein the core-material cord layer has a thickness of 1 to 3 mm.

12. A tire comprising the tire reinforcing member according to any one of claims 9 to 11.
